# EUROPÄISCHE PATENTSCHRIFT

(11) **EP 2 036 778 B1**
(45) Veröffentlichungstag und Bekanntmachung des Hinweises auf die Patenterteilung: **11.08.2010**
(21) Anmeldenummer: 08105853.9
(22) Anmeldetag: 18.03.2003
(51) Int. Cl.: B60R 21/01

(54) **VERFAHREN ZUR VON DER SITZPOSITION EINER PERSON ABHÄNGIGEN ANSTEUERUNG IRREVERSIBLER RÜCKHALTEMITTEL**
METHOD FOR CONTROLLING IRREVERSIBLE RETAINING MEANS ACCORDING TO THE SEAT POSITION OF A PERSON
PROCEDE DE COMMANDE D'ELEMENTS DE RETENUE IRREVERSIBLES DEPENDANT DE LA POSITION ASSISE D'UN INDIVIDU

(30) Priorität: 21.08.2002 DE 10238223
(43) Veröffentlichungstag der Anmeldung: 18.03.2009
(62) Teilanmeldung aus: 03718624.4
(73) Patentinhaber: Robert Bosch GmbH, 70442 Stuttgart (DE)
(72) Erfinder: Eisele, Sybille, 74394, Hessigheim (DE); Roelleke, Michael, 71229, Leonberg-Hoefingen (DE)

(56) Entgegenhaltungen:
- EP-A- 1 167 126
- EP-A- 1 333 403
- DE-A1- 10 128 141
- US-A- 6 070 115
- US-B1- 6 227 564

## Beschreibung

### Stand der Technik

Die Erfindung betrifft ein Verfahren bei der von der Sitzposition einer Person abhängigen Ansteuerung irreversibler Rückhaltemittel, insbesondere mehrstufig zündbarer Airbags.

Es ist allgemein üblich, Fahrer und Beifahrer in einem Kraftfahrzeug im Falle eines Aufpralles (Unfalles) durch Zünden von Airbags vor gefährlichen Verletzungen zu schützen. In vielen Fahrzeugen werden mehrstufig zündbare Airbags eingesetzt, bei denen die Zündfolge und/oder der Zündabstand der verschiedenen Stufen des Airbags abhängig von der Crashschwere und/oder der Sitzposition eines Insassen einstellbar sind. Crashschwere und Sitzposition werden aus im Fahrzeug gemessenen Größen abgeleitet.

Untersuchungen haben jedoch gezeigt, dass die Ansteuerung abhängig von der so ermittelten Sitzposition einer Person in vielen Fällen nicht optimal ist.

Es ist daher Aufgabe der Erfindung, die von der Sitzposition einer Person abhängige Ansteuerung irreversibler Rückhaltemittel, insbesondere mehrstufig zündbarer Airbags weiter zu verbessern.

US 6 227 564 B offenbart ein Verfahren, bei der von der Sitzposition einer Person abhängigen Ansteuerung ireversibler Rückhaltemittel, in dem erfasst wird, ob ein Bremsvorgang eingeleitet worden ist, wobei zu Beginn des Bremsvorgangs vorliegende Istposition der Person erfasst wird, wobei die Bremsschwere erfasst wird und wobei aus der Istposition zu Beginn des Bremsvorgangs und der Bremsschwere eine durch den Bremsvorgang hervorgerufene Positionsverlagerung der Person ermittelt wird. Abhängig von der Positionsverlagerung wird eine zum Zeitpunkt der Erfassung eines Aufpralls vorliegende Sitzposition ermittelt und für die Ansteuerung der Rückhaltemittel herangezogen. Zur Ermittlung der Bremsschwere wird die Beschleunigung des Fahrzeugs bei dem Bremsvorgang erfasst. Zur Ermittlung eines Maßes der Bremsschwere wird der Wert der Beschleunigung zweimal integriert. Positionsverlagerung aus der Bremsschwere wird nur ermittelt, wenn die Beschleunigung unter dem Schwellenwert liegt, der eine sofortige Auslösung der Rückhaltemittel verlangt. Aus DE 101 28141 A1 ist eine Fahrzeugsicherheitsanordnung und Verfahren zur Abschwächung der Folgen eines Zusammenstoßes bekannt. Dabei weist ein Bremspedalsystem einen Pedalarm bzw. Bremsarm auf, der in Richtung eines Pfeils für die Aktivierung der Fahrzeugbremsen verschoben bzw. versetzt wird. Die Bewegungsrate des Bremsarms wird durch einen herkömmlichen Positionssensor detektiert, der beispielsweise einen Drehpotentiometer aufweisen kann.

### Vorteile der Erfindung

Diese Aufgabe wird gemäß der Erfindung bei einem Verfahren mit den Merkmalen des Anspruches 1 gelöst.

Die Erfindung geht von der bei der Untersuchung von Unfällen mit Schwerverletzten gewonnen Erkenntnis aus, dass bei ca. 50% solcher Unfälle der Fahrer vorher gebremst hat und sich als Folge des Bremsens die Sitzposition geändert hat, nämlich eine Bremsvorverlagerung stattgefunden hat. Diese unterscheidet sich bei Fahrer und Beifahrer. Der Fahrer versucht sich im allgemeinen am Lenkrad beim Bremsvorgang abzustützen, so dass die Bremsvorverlagerung und der zeitliche Ablauf der Bremsvorverlagerung sich gegenüber einem Beifahrer unterscheiden, der die Möglichkeit einer Abstützung nicht besitzt, zumal im allgemeinen der Beifahrer unaufmerksam ist.

Abhängig von einer in üblicher Weise laufend und damit vor Einleitung eines Bremsvorganges erfassten Sitzposition lässt sich abhängig von dem Beginn des Bremsvorganges und der durch den Bremsvorgang bewirkten Bremsschwere die Bremsvorverlagerung, also die durch den Bremsvorgang bewirkte Änderung der Position berechnen und zur Ansteuerung der Rückhaltemittel im Falle eines Unfalles heranziehen. Ferner lässt sich der Einfluss reversibler Rückhaltemittel, insbesondere des Gurtes bestimmen und kann berücksichtigt werden, und zwar als Maximalwert einer Bremsvorverlagerung.

### Zeichnung

Die Erfindung wird im folgenden anhand des in der Zeichnung dargestellten Ausführungsbeispieles näher erläutert. Es zeigen:
- Fig. 1: schematisch den grundsätzlichen Aufbau einer Anordnung gemäß der Erfindung,
- Fig. 2: ein Flussdiagramm zur Erläuterung des Ablaufes des erfindungsgemäßen Verfahrens bzw. der Arbeitsweise der erfindungsgemäßen Anordnung.

### Beschreibung eines Ausführungsbeispiels

In einem Sitz 1 mit Sitzfläche 2, Rücklehne 3 und Kopfstütze 4 in einem schematisch dargestellten Fahrzeug 5 sitzt eine Person 6. Diese Person 6 soll im Falle eines Unfalles (Aufprall auf ein Hindernis, Crash) vor gefährlichen Verletzungen geschützt werden. Zu diesem Zweck sind der Person 6 in an sich bekannter Weise reversibel ansteuerbare Rückhaltemittel, wie Gurtstrammer und/oder irreversibel ansteuerbare Rückhaltemittel wie Airbags zugeordnet. Im Rahmen der vorliegenden Erfindung sind schematisch dargestellte irreversibel ansteuerbare Rückhaltemittel 7 vorgesehen, die in einer bestimmten an sich üblichen räumlichen Beziehung innerhalb des Fahrzeuges 5 der Person 6 gegenüber angeordnet sind. Insbesondere handelt es sich bei dem irreversibel ansteuerbaren Rückhaltemittel 7 um einen mehrstufig zündbaren Airbag, bei dem in an sich bekannter Weise die verschiedenen Stufen in einer von der Crashschwere und/oder der Insassenposition der betroffenen Person 6 abhängigen Weise die Reihenfolge der Zündung der Stufen und/oder der zeitliche Abstand der Zündung der verschiedenen Stufen angepasst gezündet werden. Geeignete Anordnungen sind handelsüblich, weshalb es entbehrlich ist, deren Aufbau und deren Wirkungsweise näher zu erläutern. Dem irreversibel ansteuerbaren Rückhaltemittel 7 ist eine Auslöseeinrichtung 8 zugeordnet, die die entsprechenden Zündsignale erzeugt und abgibt. Der Auslöseeinrichtung 8 ist eine Ansteuereinrichtung 9 zugeordnet, die eine Reihe von Signalen 10 empfängt und aus diesen Signale ermittelt, die bei Vorliegen eines Unfalles die Auslöseeinrichtung 8 zur Abgabe der Auslösesignale aller Rückhaltemittel, insbesondere der Zündsignale an die irreversiblen Rückhaltemittel 7 veranlasst. Das Vorliegen eines Unfalls wird insbesondere und bspw. mittels eines im Fahrzeug 5 vorgesehenen Beschleunigungssensors 11 erfasst. Das vom Beschleunigungssensor 11 abgegebene Beschleunigungssignal 12 überschreitet bei einem Aufprall auf ein Hindernis (Crash) einen bestimmten Schwellenwert, der deutlich über 1g liegt, was die Ansteuereinrichtung als Vorliegen eines Unfalles interpretiert und zur Abgabe entsprechender Signale an die Auslöseeinrichtung 8 veranlasst. Bei den Signalen 10 handelt es sich dabei um solche Signale, die in an sich bekannter Weise es ermöglichen, die Crashschwere und/oder die Insassenposition in herkömmlicher Weise zu erfassen.

Es wird darüber hinaus erfasst, ob der Fahrer einen Bremsvorgang eingeleitet hat. Es wird ferner die Bremsschwere erfasst, also ein Maß für die durch den Bremsvorgang ausgelöste Beschleunigung bzw. Verzögerung, die bei starkem Bremsen zwischen 0,5 und 1g liegt.

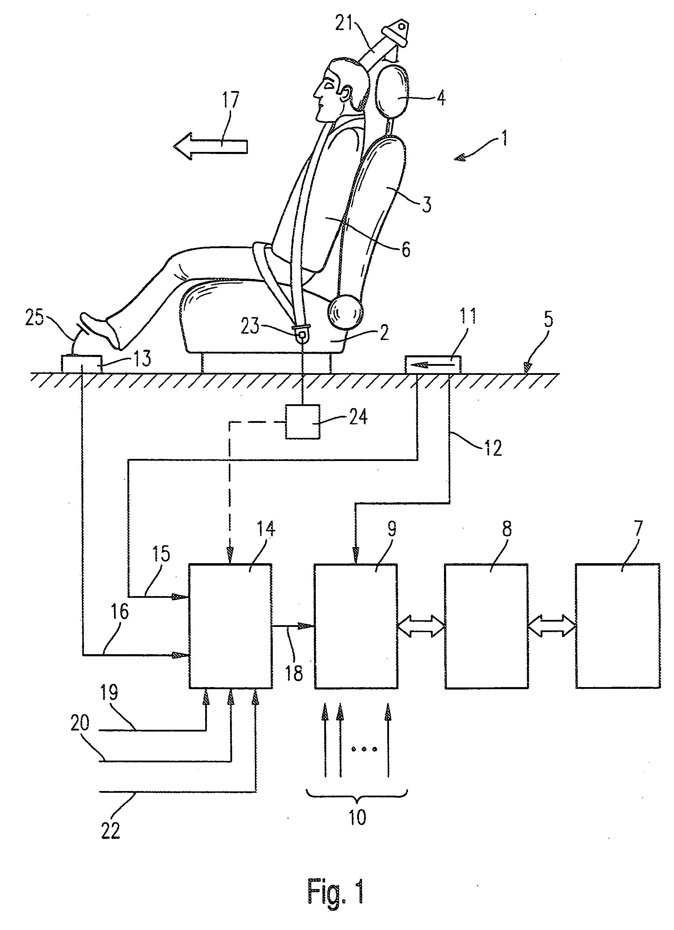

Dies ist in Fig. 1 schematisch dargestellt.

Fig. 1 zeigt ein Bremspedal 25 und eine Sensor 13 zur Erfassung des Bremsbeginnes. Bei dem in Fig. 1 dargestellten Ausführungsbeispiel wird die Bremsschwere mittels der durch den Bremsvorgang erreichten Beschleunigung (Verzögerung) ermittelt, wozu ein entsprechender Beschleunigungssensor vorgesehen ist, wobei es sich um den gleichen Beschleunigungssensor 11 handeln kann, mittels dem auch das Vorliegen des Crashbeginnes ermittelt wird. Selbstverständlich kann auch ein gesonderter Sensor vorgesehen sein.

Mittels einer Rechenschaltung 14 wird ausgehend von dem eine Bremsschwere bezeichnenden oder dessen Bestimmung ermöglichenden Signal 15 bei Vorliegenden des einen Bremsbeginn anzeigenden Signals 16 eine durch den Bremsvorgang bewirkte Positionsänderung der Person 6 nach vorne, kurz Bremsvorverlagerung 17, berechnet.

Diese Bremsvorverlagerung 17 ist im wesentlichen abhängig von der durch den Bremsvorgang bewirkten Beschleunigung bzw. Verzögerung und kann daher durch zweimaliges Integrieren eines entsprechenden Beschleunigungssignals (dem Signal 15) ermittelt werden. Das dieser Bremsvorverlagerung 17 entsprechende Signal 18 wird der Ansteuereinrichtung 9 zugeführt und dient dort zur Anpassung der dort ermittelten Ansteuersignale für die Auslöseeinrichtung 8 derart, dass im Falle eines Unfalles (Signal 12) die durch die Bremsvorverlagerung 17 erreichte tatsächliche Position der Person 6 für die Zündung der irreversiblen Rückhaltemittel 7 insbesondere eines mehrstufigen Airbags herangezogen wird.

Um zu vermeiden, dass eine durch einen Unfall bedingte Beschleunigung als durch einen Bremsvorgang bedingte Beschleunigung interpretiert wird, ist es zweckmäßig, die Berechnung in der Rechenschaltung 14 nur durchzuführen, wenn das Beschleunigungssignal unter einem vorgegebenen Schwellenwert 19 liegt. Dieser Schwellenwert 19 sollte über den durch einen Bremsvorgang maximal erreichbaren Wert einer Beschleunigung (Verzögerung) liegen, jedoch unter dem Wert, der als Vorliegen eines Unfalles zu interpretieren ist.

Wie durch einen zweiten Schwellenwert 20 schematisch angedeutet, kann es zweckmäßig sein, die Berechnung nur dann durchzuführen, wenn eine bestimmte Mindestbremsschwere vorliegt, z. B. eine Bremsschwere, bei der selbst ein unaufmerksamer Beifahrer keiner Bremsvorverlagerung 17 unterworfen wird.

Die Rechenschaltung 14 kann das Signal 18 für Fahrer und Beifahrer in unterschiedlicher Weise berechnen, um zu berücksichtigen, dass der Fahrer im allgemeinen aufmerksam ist und sich am Lenkrad bei einem Bremsvorgang abzustützen versucht, wodurch die Bremsvorverlagerung 17 einen anderen zeitlichen Verlauf nimmt.

Im allgemeinen kann davon ausgegangen werden, dass eine in einem Sitz 1 sitzende Person 6 den im Fahrzeug 5 vorgesehen Gurt 21 angelegt hat. Durch das Anlegen des Gurtes 21 ist ein maximaler Wert der Bremsvorverlagerung 17 vorgegeben, entsprechend einem Signal 22. Der Oberkörper der Person 6 kann sich in dem Sitz 1 lediglich nur soweit nach vorne bewegen, bis die übliche mechanische Gurtarretierung zzgl. einer Gurtlose greift. Die Gurtlose ist ein empirischer Wert entsprechend der Summe aus Kleiderlose, Körperlose und Filmspuleffekt. Die Kleiderlose ist ein durch die Nachgiebigkeit von Kleidung, insbesondere auch dicker Kleidung, vorgegebener empirischer Wert. Die Körperlose beruht auf den Körpereigenschaften der Person 6, der Filmspuleffekt bezeichnet das Gleitverhalten zwischen Gurt und Kleidung bzw. Person. Für diese Gurtlose kann ein Maximalwert angegeben werden, das Signal 22, wobei dann, wenn die aufgrund der Bremsschwere (Signal 15) berechnete Bremsvorverlagerung 17 diesen Schwellenwert 22 überschreitet, letzterer Wert als Wert für die Bremsvorverlagerung 17 herangezogen wird. Es ist zu bemerken, dass Gurtsysteme, wie der Gurt 21 einen integrierten Beschleunigungssensor, einen Kugelmechanismus, besitzen und daher mechanisch arretieren, entweder wenn die Gurtauszugsgeschwindigkeit einen gewissen Schwellenwert überschreitet oder wenn die Beschleunigung einen gewissen Schwellenwert überschreitet (im allgemeinen 0,2g). Somit greift die Arretierung des Gurtes 21 sobald eine starke Bremsung auftritt, was bei einem möglicherweise bevorstehenden Unfall vorauszusetzen ist.

Da nicht immer vorausgesetzt werden kann, dass das betroffene Fahrzeug 5 nur dann betriebsfähig ist, wenn alle Gurte 21 angelegt sind, ist es zweckmäßig den Schwellenwert 22 für die Gurtlose nur dann wirken zu lassen, wenn durch Schließen des Gurtschlosses 23 das Anlegen des Gurtes 21 manifestiert ist. Hierzu kann ein entsprechender Sensor 24 vorgesehen sein.

Falls das Fahrzeug 5 über ein Insassenpositionserfassungssystem verfügt, das mit vergleichsweise hoher Frequenz die Ist-Position der Person 6 regelmäßig erfasst, ist es erfindungsgemäß, die durch die Rechenschaltung 14 ermittelte auf der Bremsvorverlagerung 17 beruhende Insassenposition mit der tatsächlichen Insassenposition bei jeder Abtastung zu vergleichen und gegebenenfalls einen entsprechenden Abgleich durchzuführen, der in einer Neuberechnung der Bremsvorverlagerung 17 unter Zugrundelegung dieser Ist-Postition beruht. Dies erfordert eine Abtastrate, die eine Abtastung ermöglicht, bevor der Insasse 6 bei einer Bremsung den durch die Gurtlose gemäß Signal 22 bestimmte maximale Bremsvorverlagerung erreicht hat. Die Erfindung erlaubt aber eine Anpassung der Zündvorgänge bei entsprechend niedrigen Abtastraten.

Solche Erfassungen sind dann möglich, wenn die Position des Insassen mittels Videoeinrichtungen erfasst wird. Aber auch hier können sehr niedrige Abtastraten möglich sein.

Die Sitzposition der Person 6 im Sitz 1 vor bzw. zu Beginn eines Bremsvorganges kann jedoch auch in anderer Weise bestimmt werden, beispielsweise mittels einer Sitzmatte über eine Schwerpunktbestimmung (nicht im einzelnen dargestellt). Eine weitere Möglichkeit besteht darin, über in der Sitzschiene des Sitzes 1 befindliche Kraftsensoren die Position der Person 6 unmittelbar nach dem Einsteigen zu erfassen, und zwar vor dem Anlegen des Gurtes 21 (nicht im einzelnen dargestellt). Auch nach angelegtem Gurt 21 lässt sich auf diese Weise eine Positionsbestimmung durchführen, wobei allerdings die Gurtkraft, die auch eine vertikale Komponente hat, bei der Berechnung des Schwerpunktes und damit der Position der Person 6 berücksichtigt werden muss.

Der Beginn eines Bremsvorganges (Signal 16) mittels des Sensors 13 kann in unterschiedlicher Weise bestimmt werden. Beispielsweise mittels des Bremsdruckverlaufes, oder dem Weg des Bremspedals 25 oder dem Auslenkwinkel des Bremspedals 25. Um die erfindungsgemäße Anordnung nur bei bestimmten Mindestbremsschweren (Signal 20) wirken zu lassen, kann auch die Geschwindigkeit erfasst werden, mit der der Fahrer das Bremspedal 25 betätigt. Falls das Fahrzeug 5 eine Einrichtung besitzt, die bei Beginn einer Bremsung zu arbeiten beginnt, beispielsweise einen sogenannten Bremsassistenten, so kann die von diesem in dieser Hinsicht diskriminierbare Größe als Signal 16 verwendet werden.

Somit kann bei der erfindungsgemäßen Anordnung in großem Umfang auf Sensoren zurückgegriffen werden, die jedenfalls in vielen Fahrzeugen 5 serienmäßig vorhanden sind. Durch die Erfindung lassen sich somit irreversible Rückhaltemittel 7 in einer an die tatsächliche Situation besser angepassten Weise zünden, sobald das Vorliegen eines Unfalles festgestellt ist (Signal 12).

Zweckmäßig wird das System erst rückgestellt, wenn das Fahrzeug 5 zum Stillstand heruntergebremst ist oder zumindestens auf eine solche niedrige Geschwindigkeit, bei der mit gefährlichen Unfällen nicht mehr gerechnet werden muss.

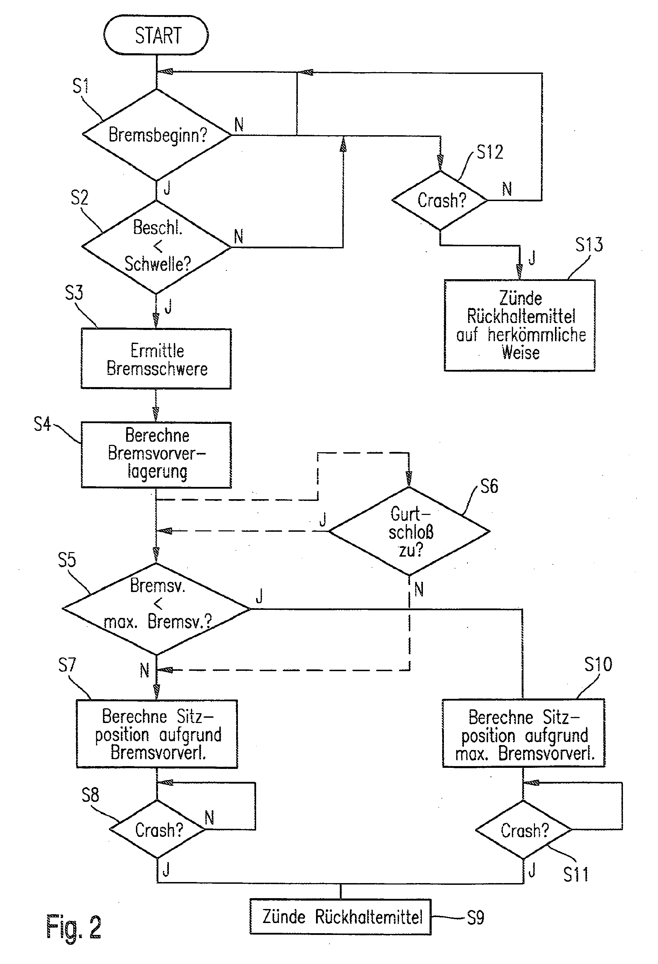

Die erfindungsgemäße Vorgehensweise wird nochmals anhand des Flussdiagramms gemäß Fig. 2 kurz erläutert.

In einem Schritt S1 wird erfasst, ob das Bremspedal 25 betätigt wird, also ein Bremsbeginn vorliegt. Bejahendenfalls wird in einem Schritt S2 erfasst, ob die Beschleunigung des Fahrzeuges 5 und damit die Beschleunigung, der die Person 6 unterworfen wird, unter einer oberen Schwelle (Signal 19) liegt. Bejahendenfalls wird zunächst in einem Schritt S3 die Bremsschwere ermittelt, beispielsweise durch zweifaches Integrieren des Beschleunigungssignals 15 vom Sensor 11. Anschließend wird in einem Schritt S4 die Bremsvorverlagerung 17 aus der Bremsschwere und dem Beginn des Bremsvorganges (Bremsbeginn) ermittelt.

Im einem Schritt S5 wird ermittelt, ob die berechnete Bremsvorverlagerung 17 kleiner ist als eine maximale Bremsvorverlagerung, die durch die durch die Gurtlose bestimmte Schwelle gemäß Signal 22 bestimmt ist. Gegebenenfalls kann zuvor in einem Schritt S6 ermittelt werden, ob das Gurtschloss 23 geschlossen ist. Ist die Bremsvorverlagerung 17 niedriger als eine maximale Bremsvorverlagerung, so werden in einem Schritt S7 aufgrund dieser Bremsvorverlagerung 17 diejenigen Größen berechnet, die im Falle eines Crashs einen optimalen Schutz der Person 6 ermöglichen, um im Fall der Erfassung eines Crashs in einem Schritt S8 eine entsprechende Zündung, Schritt S9, der irreversiblen Rückhaltemittel 7 auszulösen.

Erreicht oder überschreitet die im Schritt S5 berechnete Bremsvorverlagerung 17 die maximale Bremsvorverlagerung so wird in einem Schritt S10 die maximale Bremsvorverlagerung für die Berechnung von Größen zur optimalen Ansteuerung der irreversiblen Rückhaltemittel 7 herangezogen und werden diese bei Erfassen eines Crashs in einem Schritt S11 entsprechend angesteuert bzw. gezündet.

Wird im Schritt S6 ermittelt, dass das Gurtschloss 23 nicht geschlossen ist, so wird ausschließlich die entsprechend Schritt S7 berechnete Bremsvorverlagerung 17 herangezogen.

Überschreitet in Schritt S2 die Beschleunigung den Schwellenwert, oder wird in Schritt S1 kein Bremsvorgang erfasst, so wird in üblicher Weise vorgegangen, nämlich in einem Schritt S12 erfasst, ob ein Crash vorliegt (Signal 12) und bejahendenfalls die Zündung der Rückhaltemittel in herkömmlicher Weise ausgelöst (Schritt S13).

Durch die Erfindung wird die Auslösung der Rückhaltemittel in solchen Fällen verbessert, bei denen der Fahrer vor dem Unfall einen Bremsvorgang einleitet, in der Hoffnung den Unfall zu vermeiden oder dessen Wirkungen stark herabzusetzen.

Die Erfindung ist insbesondere dort einsetzbar, wo eine positionsabhängig unterschiedliche Ansteuerung von Rückhaltemitteln erfolgt, insbesondere bei mehrstufig zündbaren Airbags.

## Patentansprüche

1. Verfahren bei der von der Sitzposition einer Person (6) abhängigen Ansteuerung irreversibler Rückhaltemittel (7), insbesondere mehrstufig zündbarer Airbags, wobei die zu Beginn eines Bremsvorgangs vorliegende Ist-Position der Person (6) erfasst wird, wobei die Bremsschwere erfasst wird, wobei aus der Ist-Position zu Beginn des Bremsvorganges und der Bremsschwere eine durch den Bremsvorgang hervorgerufene Positionsverlagerung (17) der Person (6) ermittelt wird und wobei abhängig von dieser Positionsverlagerung (17) eine zum Zeitpunkt der Erfassung eines Aufpralles vorliegende Sitzposition ermittelt und für die Ansteuerung der Rückhaltemittel (7) herangezogen wird, wobei zur Ermittlung der Bremsschwere die Beschleunigung des Fahrzeuges (5) bei dem Bremsvorgang erfasst wird, wobei zur Ermittlung eines Maßes der Bremsschwere der Wert der Beschleunigung des Fahrzeuges (5) bei dem Bremsvorgang zweifach integriert wird, wobei die Positionsverlagerung aus der Bremsschwere nur ermittelt wird, wenn die Beschleunigung unter einem vorgegebenen Schwellenwert (19) liegt, wobei dieser Schwellenwert (19) so bemessen wird, dass der Schwellenwert (19) über dem durch den Bremsvorgang maximal erreichbaren Wert der Beschleunigung und unter dem Wert, der als Vorliegen eines Unfalls zu interpretieren ist, liegt, **dadurch gekennzeichnet, dass** erfasst wird, (S1) ob ein Bremsvorgang eingeleitet worden ist, indem erfasst wird, ob ein Bremspedal (25) betätigt wird, dass die Ist-Position der Person (6) regelmäßig erfasst wird, die jeweils erfasste Ist-Position mit der durch die ermittelte Positionsverlagerung (17) ermittelten Sitzposition verglichen wird und bei Abweichung diese ermittelte Sitzposition durch die jeweils erfasste Ist-Position ersetzt und die durch den weiteren Bremsvorgang hervorgerufene Positionsverlagerung neu ermittelt wird.

## Claims

1. Method for actuating irreversible retaining means (7), in particular airbags which can be fired in multiple stages, as a function of the sitting position of a person (6), wherein the actual position of the person (6) which is present at the start of a braking process is detected, wherein the severity of braking is detected, wherein a position displacement (17) of the person (6) which is caused by the braking process is determined from the actual position at the start of the braking process and the severity of braking, and wherein a sitting position which is present at the time of detection of an impact is detected from this position displacement (17) and is used for actuating the retaining means (7), wherein the acceleration of the vehicle (5) during the braking process is detected in order to determine the severity of braking, wherein the value of the acceleration of the vehicle (5) during the braking process is integrated twice in order to determine a measure of the severity of braking, wherein the position displacement is determined from the severity of braking only if the acceleration is below a predefined threshold value (19), wherein this threshold value (19) is dimensioned such that the threshold value (19) is above the maximum value of the acceleration which can be reached as a result of the braking process and below the value which is to be interpreted as indicating the presence of an accident, **characterized in that** it is detected (S1) whether a braking process has been initiated by detecting whether a brake pedal (25) is activated, **in that** the actual position of the person (6) is detected on a regular basis and the respectively detected actual position is compared with the sitting position determined by means of the position displacement (17) which is determined, and in the event of a deviation this determined sitting position is replaced by the respectively detected actual position and the position displacement which has been caused by the further braking process is determined again.

## Revendications

1. Procédé pour la commande de moyens de retenue irréversibles (7), dépendant de la position assise d'une personne (6), notamment d'airbags amorçables en plusieurs étapes, la position actuelle de la personne (6) existant au début d'une opération de freinage étant détectée, l'intensité du freinage étant détecté, à partir de la position actuelle au début de l'opération de freinage et de l'intensité de freinage, un décalage de position (17) de la personne (6) provoqué par l'opération de freinage étant détecté, et en fonction de ce décalage de position (17), une position assise existant à l'instant de la détection d'un accident étant détectée et étant utilisée pour la commande des moyens de retenue (7), pour la détection de l'intensité de freinage, l'accélération du véhicule (5) lors de l'opération de freinage étant détectée, pour la détection d'une mesure de l'intensité de freinage, la valeur de l'accélération du véhicule (5) lors de l'opération de freinage étant doublement intégrée, le décalage de position n'étant détecté à partir de l'intensité de freinage que lorsque l'accélération se situe en dessous d'une valeur seuil prédéfinie (19), cette valeur seuil (19) étant dimensionnée de telle sorte que la valeur seuil (19) se situe au-dessus de la valeur de l'accélération pouvant être atteinte au maximum par l'opération de freinage et en dessous de la valeur qui doit être interprétée comme la présence d'un accident, **caractérisé en ce que** l'on détecte (S1) si une opération de freinage a été amorcée, en détectant si une pédale de frein (25) est actionnée, **en ce que** la position actuelle de la personne (6) est détectée régulièrement, la position actuelle détectée respective est comparée à la position assise détectée par le décalage de position détecté (17) et en cas d'écart, cette position assise détectée est remplacée par la position actuelle détectée respectivement, et le décalage de position provoqué par l'opération de freinage suivante est à nouveau détecté.
